# EUROPÄISCHE PATENTSCHRIFT

(11) **EP 1 699 717 B1**
(45) Veröffentlichungstag und Bekanntmachung des Hinweises auf die Patenterteilung: **23.01.2008**
(21) Anmeldenummer: 04789989.3
(22) Anmeldetag: 15.10.2004
(51) Int. Cl.: B65G 47/24

(54) **EINHEIT FÜR BEHÄLTER-RÜCKNAHMEAUTOMATEN**
UNIT FOR AN AUTOMATED CONTAINER RECOVERY MACHINE
UNITE POUR MACHINE DE RECUPERATION DE RECIPIENTS AUTOMATISEE

(30) Priorität: 12.12.2003 DE 10358203
(43) Veröffentlichungstag der Anmeldung: 13.09.2006
(73) Patentinhaber: Wincor Nixdorf International GmbH, 33106 Paderborn (DE)
(72) Erfinder: LUTZ, Bernhard, 33129 Delbrück (DE); MAHAHRENS, Ullrich, 59555 Lippstadt (DE)
(86) Internationale Anmeldenummer: PCT/DE2004/002287
(87) Internationale Veröffentlichungsnummer: WO 2005/056440

(56) Entgegenhaltungen:
- DE-A1- 10 055 206
- US-A- 4 717 026
- US-A1- 2003 187 546
- PATENT ABSTRACTS OF JAPAN Bd. 1998, Nr. 03, 27. Februar 1998 (1998-02-27) & JP 09 286515 A (ISHII IND CO LTD), 4. November 1997 (1997-11-04)
- PATENT ABSTRACTS OF JAPAN Bd. 018, Nr. 529 (M-1684), 6. Oktober 1994 (1994-10-06) & JP 06 183542 A (KAO CORP), 5. Juli 1994 (1994-07-05)

## Beschreibung

Die vorliegende Erfindung betrifft eine Einheit für Behälter-Rücknahmeautomaten gemäß dem Oberbegriff des Anspruchs 1.

Eine derartige Einheit ist aus EP 1 167 247 B1 bekannt. Sie weist zumindest zwei im Wesentlichen zylindrische Förderrollen auf, die parallel zueinander in Förderlängsrichtung der Artikel angeordnet sind. Die Förderrollen können um ihre Längsachse rotieren, wobei in jede Förderrolle ein in dieser umlaufendes Förderband integriert ist. Das Obertrum jedes Förderbandes ist im Wesentlichen in der Umfangsfläche der Förderrollen, die im Bereich des Obertrums der Förderbänder ausgespart ist, angeordnet. Zum Längstransport der Behälter sind die Förderrollen so zueinander verschwenkt, dass die beiden Obertrums der Förderbänder eine V-förmige Rinne bilden, in der der Behälter liegt. Der Längstransport der Behälter erfolgt bis zu einer Identifizierungseinheit, durch die Daten der Behälter erfasst werden, so z.B. ein auf der Außenseite aufgebrachter Barcode. Die Identifizierungseinheit befindet sich in aller Regel oberhalb des Förderweges bzw. seitlich von diesem. Da die Behälter durch die Aufgabe auf die Einheit eine zufällige Lage bezüglich ihrer Umfangsfläche haben, kann es sein, dass der Barcode nicht im Erfassungsbereich der Identifizierungseinheit liegt. Es ist daher erforderlich, den Behälter zu drehen. Das geschieht durch einen gleichsinnigen Drehantrieb der Förderrollen, wobei die in diese integrierten Förderbänder mitrotieren. Nach dem Erkennen des charakteristischen Merkmals des Behälters nehmen die Förderrollen wieder eine Position ein, in der die Obertrums der Förderbänder eine V-förmige Rinne bilden. Durch Antrieb der Förderbänder wird der Behälter nun zur Weiterbehandlung in Längsrichtung weitergefördert oder aber zurückgefördert, wenn es sich um einen nicht zum Annahmesystem gehörenden Behälter handelt.

Eine weitere gattungsgemäße Einheit ist in EP 1 081 661 A2 offenbart. Diese Einheit besitzt zwei im Wesentlichen identisch aufgebaute Förderer, die aus Förderelementen zusammengesetzt und gegeneinander geneigt angeordnet sind, so dass sie eine V-förmige Förderrinne bilden. Zwischen den Transportelementen sind quer zur Längsförderrichtung Schlitze vorgesehen. Unter den beiden Förderern sind zumindest über einen Teil ihrer Längserstreckung Rotationsscheiben angeordnet, die angehoben werden können, so dass sie durch die Schlitze der Transportelemente hindurchragen. Wenn diese Funktion aktiviert ist, wird ein auf den Förderern liegender Behälter durch die Rotationsscheiben von den Förderern abgehoben. Der Behälter liegt nun auf den Rotationsscheiben und wird bei gleichsinnigem Antrieb der Rotationsscheiben in Drehung versetzt. Auch hier kann auf diese Weise ein verdecktes Merkmal, z.B. ein Barcode des Behälters durch eine Identifizierungseinheit erkannt werden.

Eine weitere gattungsgemäße Einheit ist in der JP-A-09286515 offenbart. Dort ist eine Fördereinrichtung zum Transport von Obst mit einem Förderband mit darauf angeordneten Gliedern, die um ihre Achse in Drehbewegung versetzbar sind, bekannt. Diese Anordnung ist jedoch für den Transport von Behältern, bei denen ein Barcode erkannt werden soll, nicht geeignet.

Aufgabe der vorliegenden Erfindung ist es, eine weitere gattungsgemäße Einheit für Behälter-Rücknahmeautomaten zur Verfügung zu stellen.

Diese Aufgabe wird erfindungsgemäß mit einer Einheit für Behälter-Rücknahmeautomaten gelöst, die die Merkmale des Anspruchs 1 aufweist.

Bei der vorliegenden Erfindung dienen die Förderglieder der Förderketten gleichzeitig der translatorischen Bewegung und der rotatorischen Bewegung der Behälter. Zusätzliche Bauteile zum Drehantrieb der Behälter können damit entfallen.

In einer vorteilhaften Ausführungsform der Erfindung ist das Tragelement der Förderglieder ein gespanntes Seil oder Band. Ein gespanntes Seil oder Band ist ein sehr einfach zu realisierendes Tragelement auf dem die Förderglieder wie Perlen auf einer Kette aufreihbar sind. Ein derartiges Tragelement bietet weiterhin noch den Vorteil, dass es gleichzeitig die Drehachse für die Förderglieder bildet.

In einer weiteren vorteilhaften Ausgestaltung der Erfindung ist das Tragelement der Förderglieder eine Gliederkette mit sich in ihren Gliedern quer in Förderrichtung erstreckenden Aussparungen, wobei die Förderglieder die Form einer Scheibe haben und in den Aussparungen auf sich in Förderlängsrichtung erstreckenden und in den zugeordneten Gliedern abstützenden Einzelachsen drehbar gelagert sind. Es ist dabei von Vorteil, wenn jedes Glied der Gliederkette zwei Aussparungen quer zur Längsförderrichtung nebeneinander besitzt, in denen jeweils ein Förderglied angeordnet ist. Damit entfällt der Aufwand für zwei separate Förderketten.

Die erfindungsgemäße Vorrichtung kann ohne großen Aufwand, wenn ihre Förderketten nebeneinander angeordnet sind, auch als Fördereinrichtung für Kästen, Pakete usw. genutzt werden. Bei Antrieb der Förderketten in Längsrichtung werden die Kästen, Pakete oder dergleichen in Längsrichtung transportiert, bei Drehantrieb der Förderglieder in eine Richtung quer dazu. Nach diesem Prinzip können Weichen oder Sortierstrecken für Kästen, Pakete oder dergleichen aufgebaut werden.

Die Erfindung wird nachstehend anhand von zwei Ausführungsbeispielen näher erläutert. In der dazugehörigen Zeichnung zeigt:
- Fig. 1: eine perspektivische Ansicht einer Einheit nach einer ersten Ausführungsform der vorliegenden Erfindung,
- Fig. 2: eine Vorderansicht dieser Einheit,
- Fig. 3: eine perspektivische Darstellung einer Einheit nach einer zweiten Ausführungsform der Erfindung,
- Fig. 4: eine Seitenansicht dieser Einheit im verkleinerten Maßstab, und
- Fig. 5: eine Vorderansicht dieser Einheit.

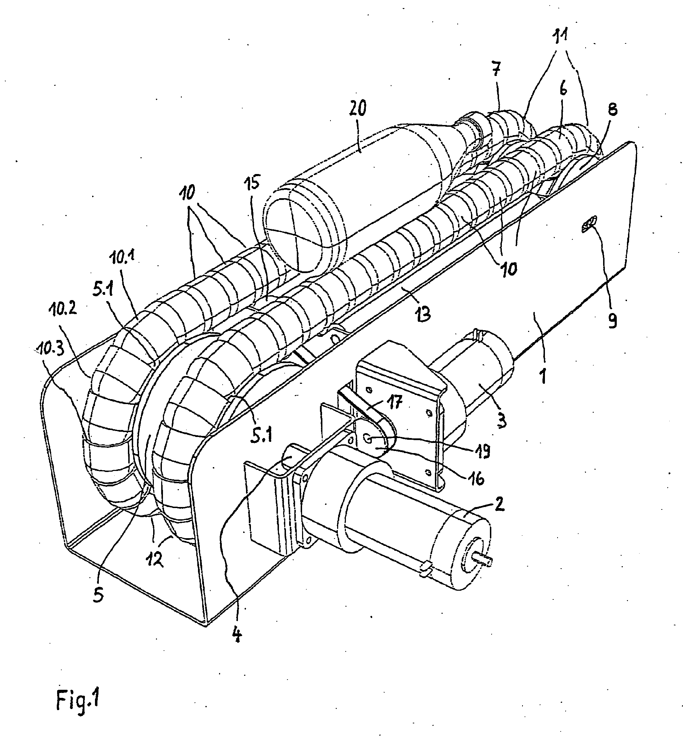

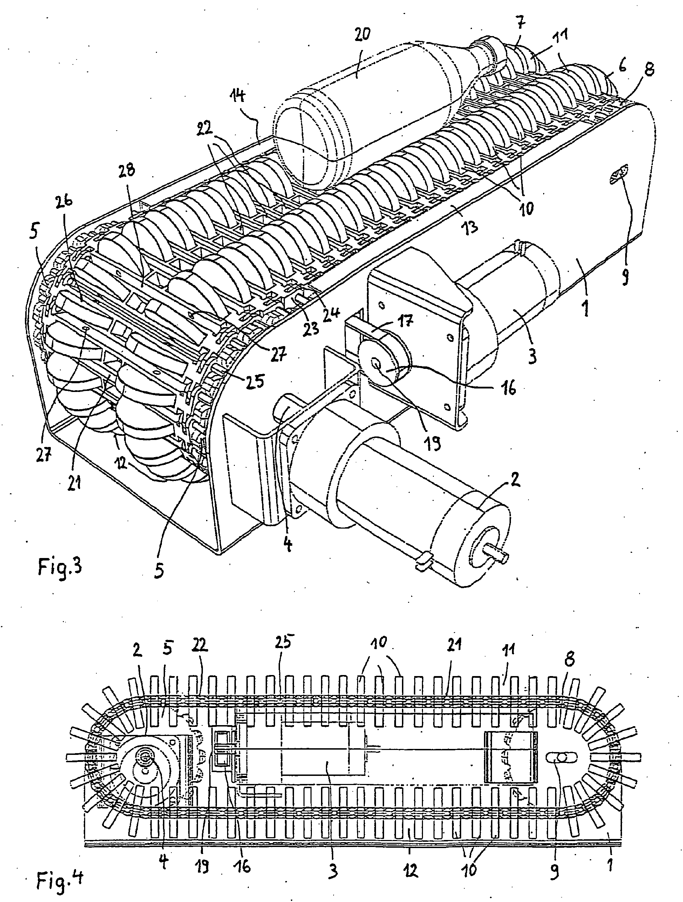

Die in Fig. 1 gezeigte Einheit besitzt ein im Querschnitt u-förmiges Untergestell 1, an dessen eine Außenwand zwei Elektromotoren 2, 3 montiert sind. Die Antriebswelle 4 des Elektromotors 2 durchragt das Untergestell 1 und trägt ein Kettenantriebsrad 5, welches zwei Umfangsnuten 5.1 mit in etwa halbkreisförmigem Querschnitt zur Aufnahme von zwei Förderketten 6, 7 besitzt. Ein ebensolches Kettenrad 8 ist am anderen Ende des Untergestells 1 in dessen Seitenwänden drehbar gelagert. Für dieses Kettenrad 8 ist eine aus der Zeichnung nicht weiter ersichtliche Spannvorrichtung 9 vorgesehen.

Die Förderketten 6, 7 setzen sich aus einzelnen Fördergliedern 10 zusammen. Jede Förderkette 6, 7 besitzt ein aus der Zeichnung nicht ersichtliches Stahlseil als Tragelement, auf dem die Förderglieder 10 aufgereiht sind. Jedes Förderglied 10 besitzt eine zylindrische Mantelfläche 10.1 sowie an seinen Stirnseiten nach dem Prinzip männlich-weiblich einen halbkugelförmigen Kopf 10.2 und eine halbkugelförmige Schale 10.3. Aufgrund dieser Ausbildung greifen die Förderglieder 10 in der Förderkette 6, 7 ineinander und können auch die Krümmung auf den Kettenrädern 5, 8 aufnehmen.

Die Förderketten 6, 7 laufen auf den Kettenrädern 5, 8 um und weisen somit ein Obertrum 11 und ein Untertrum 12 auf. Die Obertrums 11 werden seitlich durch zwei Stützwalzen 13, 14 geführt, die drehbar am Untergestell 1 gelagert sind.

Unterhalb der Obertrums 11 der Förderketten 6, 7 ist eine Andruckwalze 15 mittig zu den Förderketten 6, 7 angeordnet und erstreckt sich in deren Längsrichtung. Die Andruckwalze 15 besitzt einen Drehantrieb, der über ein auf der Antriebswelle 19 des Elektromotors 3 sitzendes Zahnriemenrad 16, einen Zahnriemen 17 sowie ein auf der Achse der Andruckwalze 15 sitzendes Zahnriemenrad 18 realisiert ist. Die Mantelfläche der Andruckwalze 15 liegt an den Zylinderflächen 10.1 der über ihr angeordneten Förderglieder 10 an.

Bei Aktivierung des Elektromotors 2 zum Antrieb des Kettenrades 5 wird eine auf den Förderketten 6, 7 liegende Flasche 20 in Längsrichtung der Förderketten 6, 7 gefördert. Wenn die Flasche 20 eine Stellung oberhalb der Andruckwalze 15 erreicht, kann der Elektromotor 2 z.B. über eine Lichtschranke oder einen anderen Sensor in dieser Stellung gestoppt werden. Wird nun über den Elektromotor 3 und den Zahnriemenantrieb 16, 17, 18 die Andruckwalze 15 in Drehbewegung gesetzt, beginnen sich die anliegenden Förderglieder 10, bedingt durch die Reibung, um die jeweils eine Drehachse bildenden Stahlseile zu drehen. Die auf diesen Fördergliedern 10 aufliegende Flasche 20 beginnt dann in gleicher Drehrichtung wie die Andruckwalze 15 zu rotieren. Aufgrund dieser Drehbewegung der Flasche 20 gelangt ein Identifizierungsmerkmal der Flasche 20, z.B. ein Barcode, in den Abtastbereich eines Sensors, z.B. eines Barcodelesers, so dass interessierende, flaschenspezifische Merkmale in das System eingelesen werden können. Wenn in der Identifizierungseinheit festgestellt wird, dass die Flasche rücknahmefähig ist, wird sie in die zuvor eingeschlagene Längsrichtung weitergefördert. Gehört die Flasche 20 nicht zu den abzunehmenden Behältern, kann sie durch reversierten Antrieb der Förderketten 6, 7, z.B. zu einem Eingabebereich zurückgefördert werden.

Um bei translatorischem Antrieb der Förderketten 6, 7 die Reibung zwischen den Fördergliedern 10 und der Andruckwalze 15 zu minimieren, kann die Andruckwalze 15 entweder von den Fördergliedern 10 nach unten weggeschwenkt werden, oder aber die Andruckwalze 15 hat an den Berührungslinien mit den Fördergliedern 10 Freimachungen in Längsrichtung. In diesem Falle ist erforderlich, nach Abschuss der Rotationsbewegung die Freimachungen wieder unter den Fördergliedern 10 auszurichten. Zu diesem Zweck ist dann ein Positionssensor für die Andruckwalze 15 vorzusehen.

Wenn man die Reibung zwischen der Andruckwalze 15 und den Fördergliedern 10 bei translatorischem Antrieb der Förderketten 6, 7 in Kauf nimmt, kann zusätzlich auch der rotatorische Antrieb aktiviert werden. Die Flasche 20 bewegt sich dann schraubenförmig.

Wenn nicht nur, wie im oberen Ausführungsbeispiel nur zwei Förderketten 6, 7 sondern mehrere Förderketten nebeneinander angeordnet werden, kann die Einheit auch als Weichen oder in Sortierstrecke für Kästen, Pakete oder ähnliches benutzt werden. Die Kästen, Pakete etc. werden dann bei translatorischem Antrieb der Förderketten in deren Längsrichtung und bei rotatorischem Antrieb der Förderglieder 10 quer zur Längserstreckung der Förderketten transportiert.

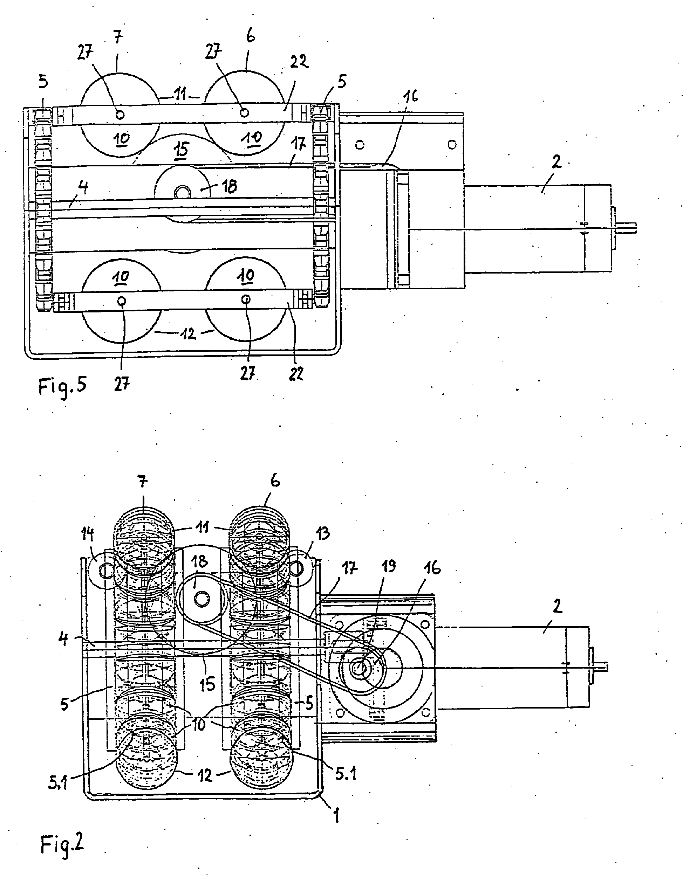

In den Fig. 3 bis 5 ist ein weiteres Ausführungsbeispiel der Erfindung dargestellt. Die Bezugszeichen des oben stehenden Ausführungsbeispiels werden, sofern es sich um gleiche bzw. gleichwirkende Bauteile handelt, übernommen.

Diese Einheit besitzt ebenfalls ein Untergestell 1 mit U-förmigem Querschnitt, an dessen eine Seitenwand ein Elektromotor 2 für die translatorische Bewegung und ein Elektromotor 3 für die rotatorische Bewegung der Fördervorrichtung vorgesehen sind. Auf der Antriebswelle 4 des Elektromotors 2 sitzen, jeweils den Seitenwänden des Untergestells 1 von innen benachbart zwei Zahnkränze 5. Eben solche, aber nicht angetriebene Zahnkränze 8 sind am anderen Ende der Einheit an den Seitenwänden des Untergestells 1 gelagert. Über die Zahnkränze 5, 8 läuft eine Gliederkette 21, die sich aus gelenkig miteinander verbundenen Gliedern 22 zusammensetzt. Die Gelenke zwischen den Gliedern 22 sind jeweils an deren seitlichen Enden mit weiblichen Gelenkteilen 23 und männlichen Gelenkteilen 24 ausgebildet, wobei diese beiden Gelenkteile 23, 24 durch einen seitlich herausragenden Kettenbolzen 25 verbunden sind. Diese Kettenbolzen 25 liegen im Bereich der Zahnkränze 5, 8 in deren Zahnlücken, so dass eine sichere Kraftübertragung über die Motorwelle 4 und die angetriebenen Zahnkränze 5 auf die Gliederkette 21 gewährleistet ist. Die nicht angetriebenen Zahnkränze 8 sind wiederum durch eine nicht weiter dargestellte Spannvorrichtung 9 beaufschlagbar, um die Spannung der Gliederkette 21 einstellen zu können. Das Obertrum der Gliederkette 21 wird über ihre Kettenbolzen 25 in seitlichen, im Querschnitt u-förmigen Führungen 13, 14 geführt.

Die Gliederkette 21 bildet ein Tragelement für quer zur Längsförderrichtung angeordnete scheibenförmige Förderglieder 10. Zur Aufnahme dieser Förderglieder 10 besitzt jedes Glied 22 der Gliederkette 21 zwei nebeneinander angeordnete quer zur Längsförderrichtung ausgerichtete Aussparungen 26. Die Förderglieder 10 sind in den Aussparungen 22 drehbar gelagert. Dazu sind in Längsförderrichtung ausgerichtete Achsen vorgesehen, die die Förderglieder 10 durchsetzen und in Querstegen 28 jedes der Glieder 22 gelagert sind.

Durch die Nebeneinanderanordnung der Förderglieder 10 in einer Gliederkette 21 sind gewissermaßen, wie bei dem vorstehenden Ausführungsbeispiel auch, zwei Förderketten 6, 7 geschaffen worden, auf deren Fördergliedern 10 sich eine zu transportierende Flasche 20 seitlich abstützt.

Zum Drehantrieb der Förderglieder 10 ist eine Andruckwalze 15 vorgesehen. Die Anordnung, der Aufbau, sowie der Antrieb dieser Andruckwalze 15 entsprechen dem zum ersten Ausführungsbeispiel Gesagten.

Auch diese Einheit ermöglicht bei gleichzeitiger Aktivierung des translatorischen und des rotatorischen Antriebs eine schraubenförmige Bewegung einer Flasche 20.

Bezüglich der Funktionsweise der Einheit gemäß dem zweiten Ausführungsbeispiel wird auf das erste Ausführungsbeispiel verwiesen, da die Funktionsweisen identisch sind. Die Einheit gemäß den Fig. 3 bis 5 kann ebenfall als Weichen oder in einer Sortierstrecke für Kästen, Pakete oder ähnliches verwendet werden.

## Patentansprüche

1. Einheit für Behälter-Rücknahmeautomaten mit einer Fördervorrichtung zum liegenden Transport der Behälter (20) in Richtung ihrer Längsachse und zum Drehen der Behälter 20 um ihre Längsachse, **dadurch gekennzeichnet, dass** die Fördervorrichtung aus einer oder mehreren nebeneinander angeordneten, umlaufenden Förderketten (6, 7) mit Tragelementen und darauf angeordneten Fördergliedern (10) besteht, wobei die Förderglieder (10) um eine sich in Förderlängsrichtung erstreckende Achse in Drehbewegung versetzbar sind.

2. Einheit für Behälter-Rücknahmeautomaten nach Anspruch 1, **dadurch gekennzeichnet, dass** die Förderglieder (10) rotationssymmetrisch um ihre Drehachse ausgeführt sind.

3. Einheit für Behälter-Rücknahmeautomaten nach Anspruch 1 oder Anspruch 2, **dadurch gekennzeichnet, dass** das Tragelement der Förderglieder (10) ein gespanntes Seil oder Band ist, welches gleichzeitig die Drehachse der Förderglieder (10) bildet.

4. Einheit für Behälter-Rücknahmeautomaten nach Anspruch 1 oder Anspruch 2, **dadurch gekennzeichnet, dass** das Tragelement der Förderglieder (10) eine Gliederkette (21) mit sich in ihren Gliedern (22) quer zur Förderlängsrichtung erstreckenden Aussparungen (26) ist, wobei die Förderglieder (10) die Form einer Scheibe haben und in den Aussparungen (26) auf sich in Förderlängsrichtung erstreckenden und in den zugehörigen Gliedern (22) der Gliederkette (21) abstützenden Einzelachsen (27) drehbar gelagert sind.

5. Einheit für Behälter-Rücknahmeautomaten nach Anspruch 4, **dadurch gekennzeichnet, dass** jedes Glied (22) der Gliederkette (21) quer zur Förderlängsrichtung zwei nebeneinander angeordnete Aussparungen (26) besitzt, in denen jeweils ein Förderglied (10) angeordnet ist.

6. Einheit für Behälter-Rücknahmeautomaten nach einem der vorstehenden Ansprüche, **dadurch gekennzeichnet, dass** zwischen dem Obertrum (11) und dem Untertrum (12) der Förderketten (6, 7) ein sich in Förderlängsrichtung erstreckende, antreibbare Andruckwalze (15) angeordnet ist, die an Fördergliedern (10) der Obertrums (11) anliegt oder in Anlage an diese bringbar ist.

7. Einheit für Behälter-Rücknahmeautomaten nach Anspruch 6, **dadurch gekennzeichnet, dass** die Obertrums (11) der Förderketten (6, 7) eine seitliche Abstützung (13, 14) besitzen.

## Claims

1. Unit for automatic container-recovery machines having a conveying apparatus for transporting the containers (20) in a lying position in the direction of their longitudinal axis and for rotating the containers (20) about their longitudinal axis, **characterized in that** the conveying apparatus comprises one or more circulating conveying chains (6, 7) which are arranged one beside the other and have carrying elements and conveying links (10) arranged thereon, it being possible for the conveying links (10) to be made to rotate about an axis extending in the longitudinal conveying direction.

2. Unit for automatic container-recovery machines according to Claim 1, **characterized in that** the conveying links (10) are configured in a rotationally symmetrical manner about their axis of rotation.

3. Unit for automatic container-recovery machines according to Claim 1 or Claim 2, **characterized in that** the carrying element of the conveying links (10) is a tensioned cable or belt which, at the same time, forms the axis of rotation of the conveying links (10).

4. Unit for automatic container-recovery machines according to Claim 1 or Claim 2, **characterized in that** the carrying element of the conveying links (10) is a link chain (21) with cutouts (26) extending in the links (22) in the direction transverse to the longitudinal conveying direction, the conveying links (10) being in the form of a disc and being mounted in the cutouts (26) such that they can be rotated on individual pins (27) which extend in the longitudinal conveying direction and are supported in the associated links (22) of the link chain (21).

5. Unit for automatic container-recovery machines according to Claim 4, **characterized in that** each link (22) of the link chain (21), in the direction transverse to the longitudinal conveying direction, has two cutouts (26) which are arranged one beside the other and in which a respective conveying link (10) is arranged.

6. Unit for automatic container-recovery machines according to one of the preceding claims, **characterized in that** arranged between the top strand (11) and the bottom strand (12) of the conveying chains (6, 7) is a drivable pressure-exerting roller (15) which extends in the longitudinal conveying direction and butts against conveying links (10) of the top strands (11), or can be brought into abutment against the same.

7. Unit for automatic container-recovery machines according to Claim 6, **characterized in that** the top strands (11) of the conveying chains (6, 7) have a lateral supporting means (13, 14).

## Revendications

1. Unité pour des machines automatiques à reprendre des récipients, comportant un dispositif transporteur pour transporter à plat les récipients (20) dans le sens de leur axe longitudinal et pour faire tourner les récipients (20) autour de leur axe longitudinal, **caractérisée en ce que** le dispositif transporteur consiste en une ou en plusieurs chaînes transporteuses (6, 7) qui sont l'une à côté de l'autre et tournent et qui comportent des éléments porteurs et des maillons transporteurs (10) placés sur ceux-ci, les maillons transporteurs (10) pouvant être mis en rotation autour d'un axe qui s'étend dans la direction longitudinale de transport.

2. Unité pour des machines automatiques à reprendre des récipients selon la revendication 1, **caractérisée en ce que** les maillons transporteurs (10) ont une symétrie de rotation autour de leur axe de rotation.

3. Unité pour des machines automatiques à reprendre des récipients selon la revendication 1 ou la revendication 2, **caractérisée en ce que** l'élément porteur des maillons transporteurs (10) est un câble tendu ou une bande tendue qui forme en même temps l'axe de rotation des maillons transporteurs (10).

4. Unité pour des machines automatiques à reprendre des récipients selon la revendication 1 ou la revendication 2, **caractérisée en ce que** l'élément porteur des maillons transporteurs (10) est une chaîne à maillons (21) comportant des évidements (26) qui s'étendent dans leurs maillons (22) transversalement à la direction longitudinale de transport, les maillons transporteurs (10) sont en forme de disque et sont montés de façon à pouvoir tourner dans les évidements (26) sur des axes particuliers (27) qui s'étendent en direction longitudinale de transport et qui s'appuient dans les maillons (22) associés de la chaîne à maillons (21).

5. Unité pour des machines automatiques à reprendre des récipients selon la revendication 4, **caractérisée en ce que** chaque maillon (22) de la chaîne à maillons (21) comporte transversalement à la direction longitudinale de transport deux évidements (26) situés l'un à côté de l'autre dans lesquels se trouve respectivement un maillon transporteur (10).

6. Unité pour des machines automatiques à reprendre des récipients selon l'une des revendications précédentes, **caractérisée en ce que**, entre le brin supérieur (11) et le brin inférieur (12) des chaînes transporteuses (6, 7), il y a un cylindre de pression (15) qui peut être entraîné, qui s'étend dans la direction longitudinale de transport et qui est contigu à des maillons transporteurs (10) des brins supérieurs (11) ou peut être mis en contact avec eux.

7. Unité pour des machines automatiques à reprendre des récipients selon la revendication 6, **caractérisée en ce que** les brins supérieurs (11) des chaînes transporteuses (6, 7) comportent un appui (13, 14) latéral.
